# FASCICULE DE BREVET EUROPEEN

(11) **EP 0 857 413 B1**
(45) Date de publication et mention de la délivrance du brevet: **16.04.2003**
(21) Numéro de dépôt: 98440014.3
(22) Date de dépôt: 04.02.1998
(51) Int. Cl.: A01D 78/10, A01B 73/00

(54) **Machine de fenaison**
Heuwerbungsmaschine
Haymaking machine

(30) Priorité: 11.02.1997 FR 9701710
(43) Date de publication de la demande: 12.08.1998
(73) Titulaire: KUHN S.A., 67700 Saverne (FR)
(72) Inventeur: Lechner, Jean-Claude, 67270 Saessolsheim (FR)
(74) Mandataire: Andres, Jean-Claude

(56) Documents cités:
- EP-A- 0 460 288
- EP-A- 0 614 604
- DE-A- 2 002 746
- DE-A- 2 004 349
- DE-A- 3 926 382
- DE-A- 4 122 072
- DE-U- 8 811 010
- DE-U- 9 320 479
- DE-U- 9 409 143

## Description

La présente invention se rapporte à une machine de fenaison qui comporte un bâti portant au moins un rotor pour déplacer des végétaux sur le sol, lequel rotor possède un moyeu qui est muni de bras porte-outils et qui est monté sur un axe central sensiblement vertical ou incliné dans la direction d'avancement de manière à pouvoir tourner sur celui-ci, ledit axe étant lié au bâti et comportant à son extrémité inférieure un dispositif d'appui au sol incluant au moins un balancier qui est monté sur un axe de pivotement sensiblement horizontal et qui est muni de deux roues porteuses roulant sur le sol durant le travail.

Une machine de ce genre est connue dans la demande de brevet DE 38 08 931.

Sur cette machine, le balancier avec les deux roues porteuses permet de réduire l'ampleur des déplacements transmis au rotor lorsque les roues porteuses passent sur des dénivellations. Par conséquent, ledit rotor s'adapte mieux à la surface du sol et peut avancer à plus grande vitesse.

Pour le transport de la machine d'une parcelle à une autre, l'axe central et le rotor sont soulevés par rapport aux roues porteuses afin d'éloigner les outils de travail du sol. Le soulèvement ainsi obtenu reste cependant relativement faible. De ce fait, les outils de travail peuvent accrocher des obstacles qui se trouvent sur le sol. De même, lorsque le rotor doit passer par-dessus un andain déjà formé, ses outils peuvent accrocher le fourrage et le disperser. En sus, dans les virages les roues porteuses ripent sur le sol. Cela entraîne une usure rapide de ces dernières et de leurs supports.

La présente invention a pour but de proposer une machine qui n'a pas les inconvénients précités.

A cet effet, une importante caractéristique de l'invention consiste en ce que le dispositif d'appui au sol comprend un moyen pour déplacer le ou chaque balancier autour de son axe de pivotement dans une position oblique dans laquelle une de ses deux roues porteuses et le rotor avec ses outils sont éloignés du sol en vue du transport. Ledit déplacement du ou des balanciers peut être relativement important. Le rotor est alors soulevé de telle sorte que ses outils de travail soient suffisamment éloignés du sol. De plus, le rotor ne repose plus que sur une des deux roues porteuses du ou des balanciers. Le ripage des roues sur le sol dans les virages est ainsi supprimé.

Le moyen pour déplacer le ou chaque balancier comprend notamment un vérin hydraulique. Celui-ci peut être commandé depuis le tracteur qui sert à animer la machine. La transposition de la machine de la position de travail dans la position de transport et inversement est ainsi relativement aisée.

Selon une caractéristique additionnelle de l'invention, le dispositif d'appui au sol comprend une traverse qui possède au moins un axe sur lequel est articulé un balancier, laquelle traverse est articulée par rapport à l'axe central du rotor au moyen d'un axe sensiblement horizontal, le moyen de déplacement du balancier étant constitué par un vérin hydraulique qui est articulé sur des flasques reliés à l'axe central et sur un levier de la traverse et par une tige de retenue pour le ou chaque balancier.

Cet agencement permet notamment d'obtenir un soulèvement plus important du rotor pour le transport.

D'autres caractéristiques et avantages de l'invention ressortiront de la description qui va suivre et qui se réfère aux dessins annexés qui représentent, à titre d'exemples non limitatifs, plusieurs formes de réalisation de machines selon l'invention.

Dans ces dessins :
- la figure 1 représente une vue de dessus d'un premier exemple de réalisation d'une machine selon l'invention ;
- la figure 2 représente une coupe partielle de la machine selon la figure 1, en position de travail ;
- la figure 3 représente une coupe partielle de la même machine en position de transport ;
- la figure 4 représente une vue de dessus d'un deuxième exemple de réalisation d'une machine selon l'invention ;
- la figure 5 représente une coupe partielle de la machine selon le deuxième exemple de réalisation, en position de travail ;
- la figure 6 représente une coupe partielle de la machine selon le deuxième exemple de réalisation dans la position de transport ;
- la figure 7 représente une vue de côté simplifiée d'un troisième exemple de réalisation d'une machine selon l'invention dans la position de travail ;
- la figure 8 représente la machine selon la figure 7 en position de transport ;
- la figure 9 représente une vue de côté simplifiée d'un quatrième exemple de réalisation d'une machine selon l'invention, dans la position de travail.

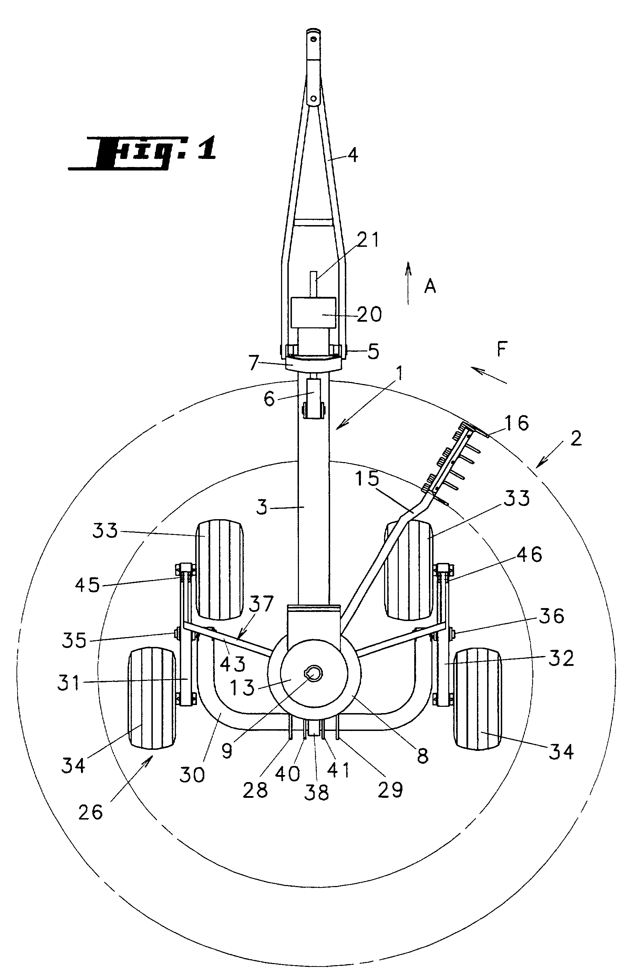

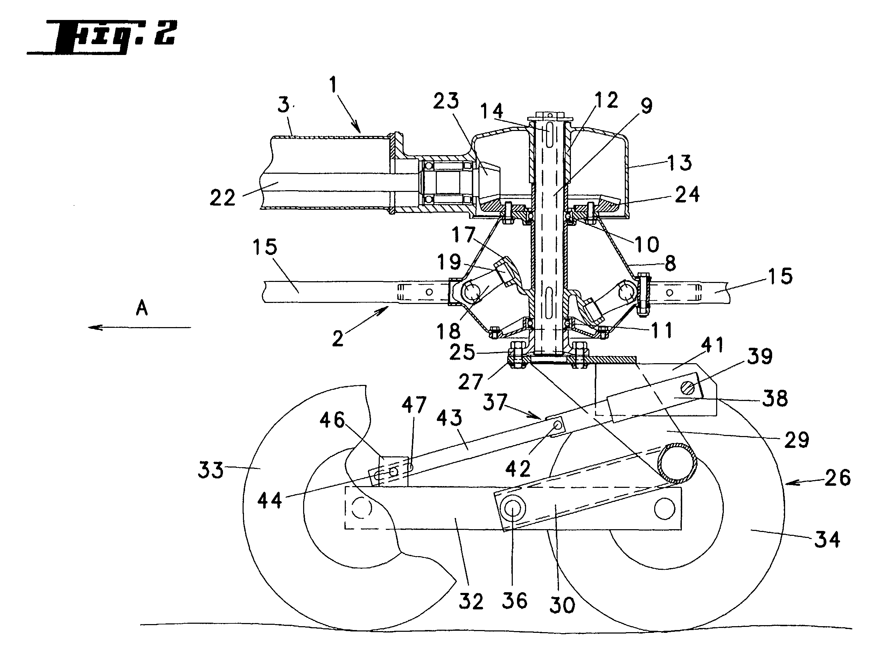

Tel que cela ressort des figures 1 à 3, la machine selon le premier exemple de réalisation comporte un bâti (1) auquel est relié un rotor (2) pour déplacer des végétaux couchés sur le sol. Ce bâti (1) est essentiellement constitué par une poutre creuse (3). Un timon (4) est articulé, au moyen d'un axe (5) sensiblement horizontal, sur l'extrémité avant de la poutre (3). Ce timon (4) permet l'accrochage à un tracteur (non représenté) servant à déplacer la machine dans la direction (A). Un vérin hydraulique de réglage (6) est articulé à la fois sur la poutre (3) et sur un cintre (7) solidaire du timon (4).

Le rotor (2) possède un moyeu (8) en forme de carter. Celui-ci est monté sur un axe central (9) au moyen de roulements (10, 11), de manière à pouvoir tourner autour. Cet axe central (9) est sensiblement vertical ou légèrement incliné dans la direction d'avancement (A). Il est logé dans un palier (12) d'un boîtier (13) qui fait partie du bâti (1) et est immobilisé en rotation dans ce palier (13) par une clavette (14). Le moyeu ou carter (8) porte plusieurs bras (15) qui s'étendent dans un plan pratiquement horizontal. Un seul de ces bras (15) est représenté sur la figure 1, afin de préserver la clarté du dessin. Ils sont munis, à leurs extrémités les plus éloignées dudit moyeu ou carter (8), d'outils de travail (16) en forme de fourches de râtelage. Chacun de ces bras (15) est monté dans un palier du moyeu ou carter (8) de manière à pouvoir pivoter sur lui-même, c'est-à-dire autour de son axe géométrique longitudinal. Dans le moyeu ou carter (8) se situe une came de commande (17) qui est fixée sur l'axe central (9). Chaque bras porte-outils (15) possède à son extrémité située à l'intérieur du moyeu ou carter (8), un levier (18) avec un galet (19) qui est guidé dans ladite came (17).

Le rotor (2) peut être entraîné en rotation sur l'axe central (9) à partir de l'arbre de prise de force du tracteur. A cet effet, la poutre (3) porte à son extrémité avant un carter (20) avec un arbre d'entrée (21) auquel peut être relié un arbre à cardans dont l'autre extrémité est en prise avec ledit arbre de prise de force. Dans la poutre (3) est logé un arbre de transmission (22) qui s'étend du carter (20) jusqu'au rotor (2). Il comporte un pignon (23) qui engrène avec une couronne dentée (24) qui est rendue solidaire du moyeu en forme de carter (8).

L'axe central (9) porte à son extrémité inférieure une embase (25) sur laquelle est vissé un dispositif (26) d'appui au sol. Celui-ci se compose d'une plaque (27) sensiblement horizontale sur laquelle sont soudées deux pattes (28 et 29) qui sont dirigées vers la bas et vers l'arrière et qui portent une traverse (30) avec deux balanciers (31, 32) dont chacun est muni de deux roues porteuses (33 et 34). La traverse (30) est en forme de U. Ses deux extrémités sont dirigées vers l'avant. Sur chacune d'elles est fixé un axe de pivotement (35, 36) sensiblement horizontal. Les balanciers (31, 32) sont montés sur ces axes de pivotement (35, 36) de manière à pouvoir tourner sur eux au moins d'un certain angle. L'une des roues porteuses (33, 34) de chaque balancier (31, 32) se situe à l'avant de l'axe de pivotement (35, 36) correspondant et l'autre à l'arrière de celui-ci. De plus, les deux roues porteuses (33, 34) de chaque balancier (31, 32) sont décalées l'une par rapport à l'autre. Les roues (33) les plus en avant sont situées sur le côté intérieur du balancier (31, 32) correspondant alors que les roues (34) qui sont en arrière se situent sur le côté extérieur du balancier (31, 32) correspondant. Cette disposition permet de rapprocher les roues (33 et 34) au maximum des outils de travail (16), afin de bien leur faire suivre les dénivellations du sol.

Le dispositif (26) d'appui au sol comprend également un moyen (37) pour déplacer chaque balancier (31, 32) autour de son axe de pivotement (35, 36) et le maintenir dans une position dans laquelle une de ses deux roues porteuses (33, 34) est éloignée du sol. Ce moyen (37) comprend un vérin hydraulique (38). Le corps de celui-ci est articulé avec un axe sensiblement horizontal (39) sur deux flasques (40, 41) qui sont solidaires de la plaque (27) qui est elle-même fixée à l'axe central (9). La tige du vérin hydraulique (38) est articulée avec un axe sensiblement horizontal (42) sur une pièce intermédiaire (43). Cette pièce intermédiaire (43) est sensiblement en forme de V avec deux branches dirigées vers le bas et vers l'avant. Chacune de celles-ci est articulée sur un axe sensiblement horizontal (44) d'une chape (45, 46) solidaire de l'extrémité avant de l'un des balanciers (31, 32). Chaque branche comporte un orifice oblong (47) dans lequel est logé l'axe d'articulation (44) correspondant. La longueur de chaque orifice oblong (47) est telle que les balanciers (31 et 32) puissent pivoter librement avec les roues porteuses (33 et 34) lorsque celles-ci suivent les dénivellations du sol.

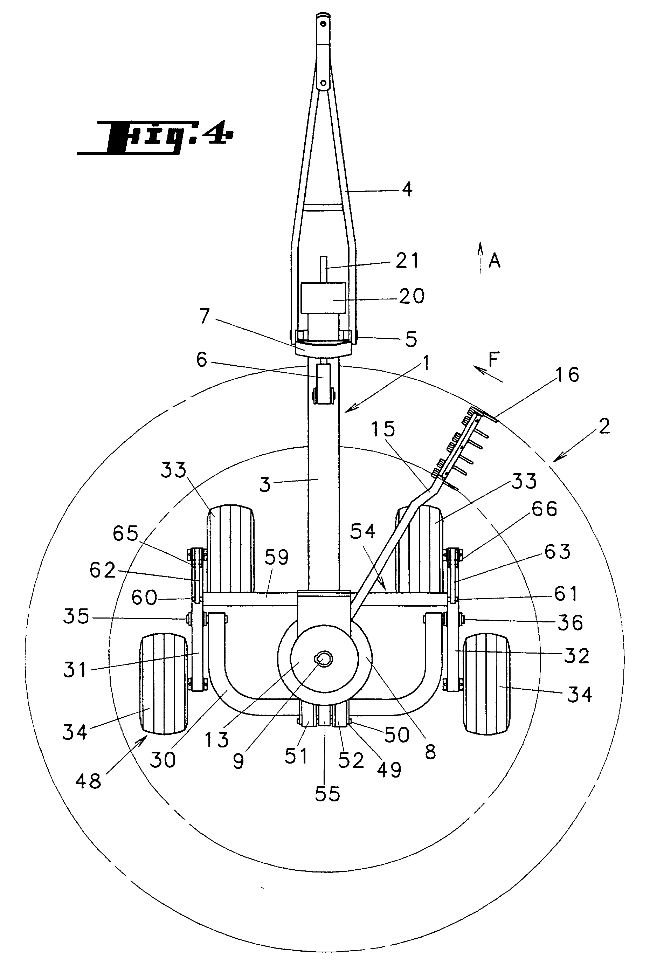

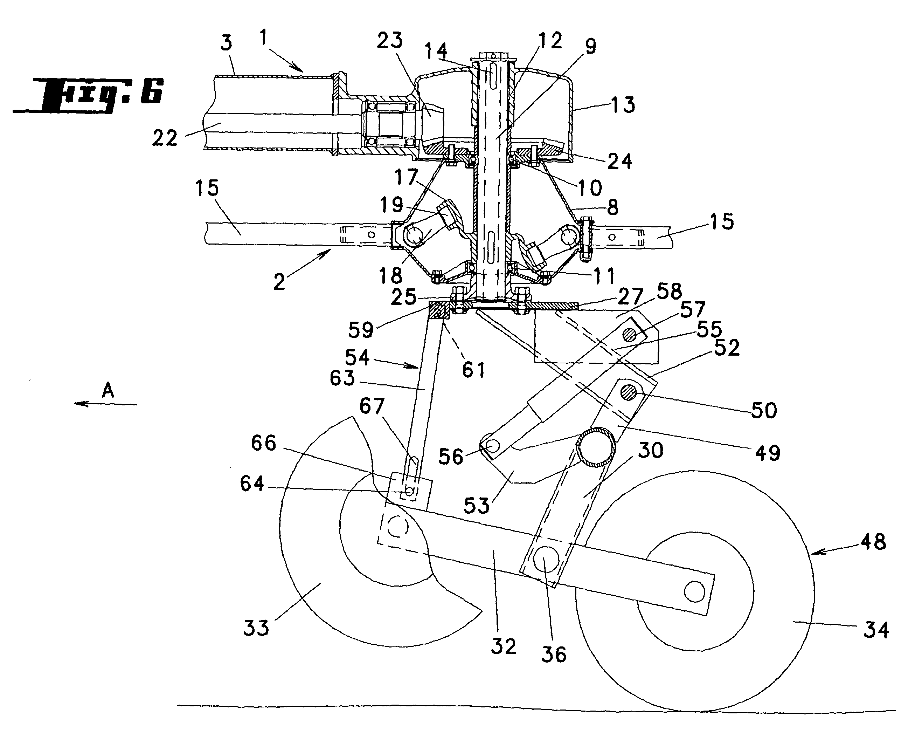

Dans l'exemple de réalisation selon les figures 4 à 6, le bâti (1) et le rotor (2) sont analogues à ceux de l'exemple précité. Pour cette raison leurs pièces constitutives ne sont plus décrites en détail et sont simplement désignées par les mêmes repères. Le dispositif (48) d'appui au sol comprend également une traverse (30) en forme de U qui possède deux axes (35 et 36) sensiblement horizontaux, sur lesquels sont articulés les balanciers (31 et 32) avec les roues porteuses (33 et 34). Cette traverse (30) comporte des oreilles (49) avec un axe d'articulation (50) sensiblement horizontal et transversal à la direction d'avancement (A). Celui-ci est guidé dans deux bras (51, 52) qui sont soudées sur la plaque (27) qui est elle-même vissée sur l'embase (25) de l'axe central (9). La traverse (30) comporte en sus un levier (53) qui est dirigé vers l'avant et vers le haut. Un moyen de déplacement (54) comprend un vérin hydraulique (55) qui est articulé à la fois sur ledit levier (53) au moyen d'un axe (56) et au moyen d'un axe (57) sur deux flasques (58) solidaires de la plaque (27) et dont l'un se situe à droite et l'autre à gauche dudit vérin hydraulique (55). Les axes d'articulation (50, 56 et 57) sont sensiblement parallèles entre eux. Le moyen de déplacement (54) comporte en sus une barre transversale (59) qui est fixée à la plaque (27) et qui est munie à chaque extrémité d'un axe d'articulation (60, 61) dirigé latéralement. Sur chacun de ces axes (60, 61) est montée une extrémité d'une tige de retenue (62, 63). L'autre extrémité de chaque tige (62, 63) est articulée sur un axe (64) d'une chape (65, 66) prévue sur chaque balancier (31, 32). Chaque chape (65, 66) se situe près de l'extrémité avant du balancier (31, 32) correspondant. Chaque tige de retenue (62, 63) comporte un orifice oblong (67) à travers lequel passe l'axe (64) correspondant. La longueur des orifices oblongs (67) est telle que les balanciers (31, 32) puissent pivoter librement autour des axes (35, 36) en suivant les dénivellations du sol. Les axes d'articulation (60, 61, 64) des tiges de retenue (62, 63) sont sensiblement horizontaux et transversaux à la direction d'avancement (A).

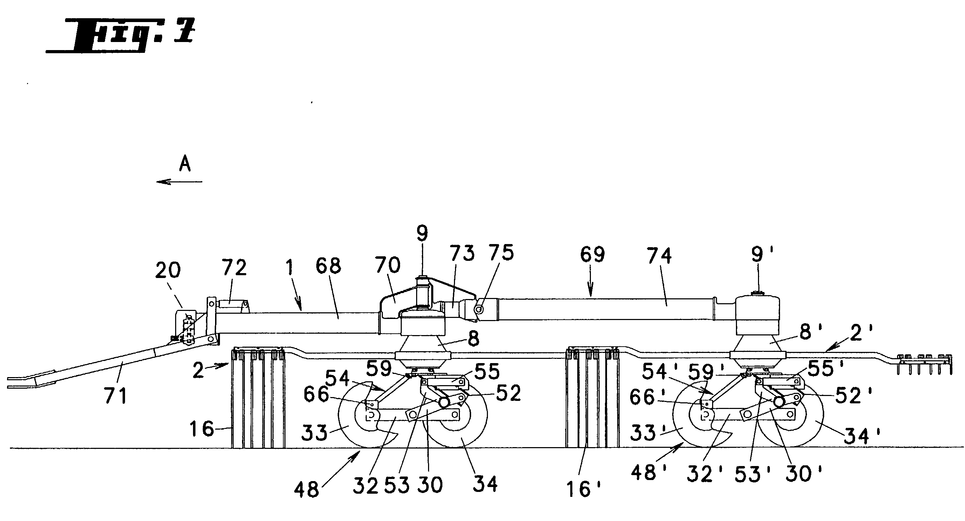

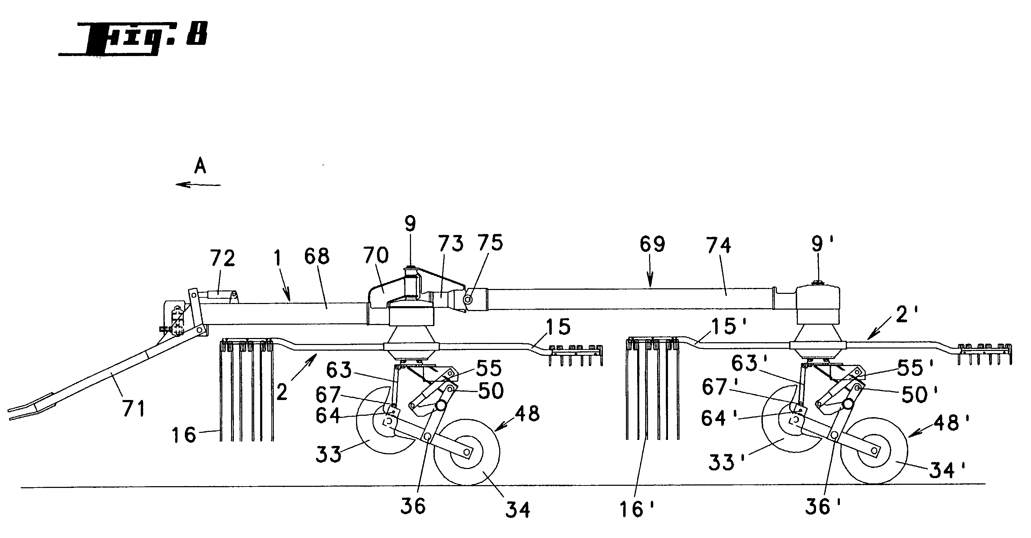

La machine selon l'exemple de réalisation des figures 7 et 8 comporte un bâti (1) avec deux rotors (2, 2'). Ceux-ci sont semblables au rotor (2) de l'exemple selon les figures 4 à 6 et ne sont plus décrits en détail. Le bâti (1) se compose essentiellement de deux poutres creuses (68 et 69). La première poutre (68) est liée à l'axe central (9) du premier rotor (2) au moyen d'un coude (70). Elle porte à son extrémité la plus en avant un timon (71) et un vérin hydraulique (72) pour le réglage de la position dudit timon (71). La deuxième poutre (69) est réalisée en deux parties (73 et 74) articulées entre elles au moyen d'un axe (75) sensiblement horizontal. La partie avant (73) est liée à l'axe central (9) du rotor (2) de telle sorte qu'elle puisse tourner autour. La partie arrière (74) est liée au rotor (2'), l'axe central (9') de ce dernier pouvant tourner par rapport à la partie arrière (74) et pouvant être immobilisé dans diverses positions. Cela permet d'amener le rotor arrière (2') dans différentes positions par rapport au rotor avant (2). L'entraînement en rotation de ces rotors (2 et 2') est assuré au moyen d'arbres de transmission situés dans les poutres (68 et 69).

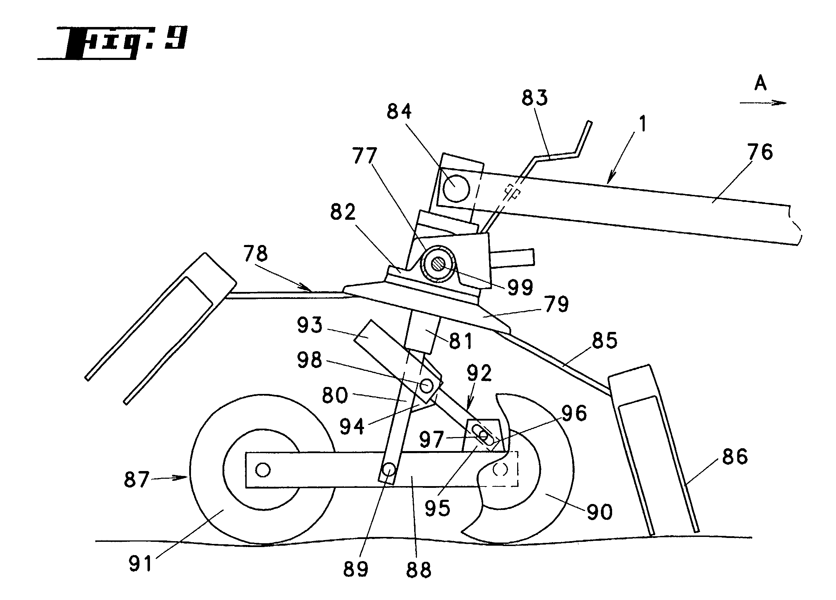

La machine selon l'exemple représenté sur la figure 9 comporte un bâti (1) composé essentiellement par une poutre longitudinale (76) munie d'un dispositif d'accouplement à un tracteur et par une poutre transversale (77). Celle-ci peut être réalisée en une ou plusieurs parties et porte plusieurs rotors (78) disposés l'un à côté de l'autre.

Chacun de ces rotors (78) possède un moyeu (79) en forme d'assiette qui est monté sur un axe central (80) de manière à pouvoir tourner autour. Cet axe est logé dans un palier (81) d'un boîtier (82) qui est solidaire de la poutre transversale (77). Il est légèrement incliné dans la direction d'avancement (A). Entre la poutre longitudinale (76) et la poutre transversale (77) est disposée une manivelle (83) qui permet de déplacer ladite poutre transversale (77) autour d'un axe d'articulation (84) en vue de modifier l'inclinaison des axes (80) de tous les rotors (78). Le moyeu (79) de chaque rotor (78) possède plusieurs bras (85) qui s'étendent plus ou moins radialement et qui possèdent à leurs extrémités extérieures des outils de travail (86) en forme de fourches.

L'extrémité inférieure de chaque axe central (80) est munie d'un dispositif (87) d'appui au sol. Celui-ci se compose d'un balancier (88) articulé sur un axe transversal (89) qui est solidaire de l'axe central (80). Le balancier (88) comporte deux roues porteuses (90 et 91) dont l'une se situe à l'avant et l'autre à l'arrière de l'axe transversal (89). Ledit dispositif (87) d'appui au sol comprend un moyen (92) pour déplacer le balancier (88) et le maintenir dans une position dans laquelle la roue porteuse (90) est éloignée du sol en vue du transport. Ce moyen (92) est constitué par un vérin hydraulique (93) qui est articulé au moyen d'un axe (98) sur un raccord (94) solidaire de l'axe central (80) et sur le balancier (88). Ce dernier comporte près de son extrémité avant une chape (95) avec un orifice oblong (96). Un axe d'articulation (97) qui est solidaire du vérin hydraulique (93) est logé dans ledit orifice oblong (96), ce qui permet au balancier (88) de pivoter autour de son axe d'articulation (89) lorsque les roues porteuses (90 et 91) passent sur des dénivellations. Des arbres de transmission (99) sont logés dans la poutre transversale (77) en vue de l'entraînement en rotation des rotors (78).

Au travail, l'andaineur selon les figures 1 à 3 est déplacé dans la direction (A) à l'aide d'un tracteur. Le rotor (2) est alors entraîné en rotation dans le sens (F) autour de l'axe central (9) à partir de l'arbre de prise de force dudit tracteur. Durant cette rotation, la came (17) commande les bras porte-outils (15), par l'intermédiaire des leviers (18) et des galets (19), de telle sorte qu'ils déplacent leurs outils de travail (16). Ainsi, sur la partie avant de leur trajectoire, ces outils (16) sont sensiblement verticaux et ramassent les produits se trouvant sur le sol. Ensuite, sur la partie latérale de leur trajectoire, les outils (16) sont relevés de sorte qu'ils déposent les produits ramassés sous la forme d'un andain. Enfin, sur la partie arrière de leur trajectoire, ils reviennent progressivement dans la position pour ramasser.

Durant ce travail, toutes les roues porteuses (33 et 34) roulent sur le sol. Le vérin hydraulique (38) est allongé et l'axe d'articulation (44) de la chape (45, 46) de chaque balancier (31, 32) se situe sensiblement au milieu des orifices oblongs (47) de la pièce intermédiaire (43). Lorsque les roues porteuses (33 et 34) passent sur des bosses ou dans des creux, elles pivotent avec le balancier (31, 32) correspondant autour de l'axe d'articulation (35, 36) de ce dernier avec la traverse (30). Les déplacements en hauteur des roues (33 et 34) sont alors plus importants que les déplacements du balancier (31, 32) correspondant au niveau de son axe d'articulation (35, 36). De ce fait, des déplacements de la traverse (30) et par conséquent de tout le rotor (2) demeurent relativement faibles. Celui-ci est ainsi beaucoup plus stable et il peut avancer à plus grande vitesse.

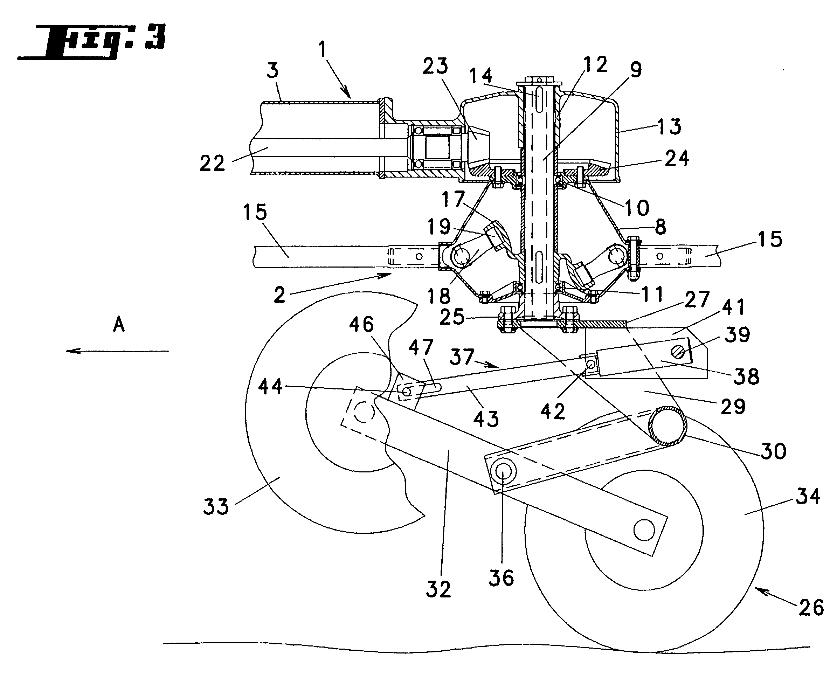

Pour le transport, l'entraînement en rotation du rotor (2) est coupé. Les vérins hydrauliques (6 et 38) sont actionnés depuis le tracteur. Le vérin hydraulique (38) se rétracte et tire la pièce intermédiaire (43) vers l'arrière. Celle-ci fait tourner les balanciers (31, 32) autour des axes de pivotement (35, 36) dans une position oblique par rapport au sol (voir figure 3). Dans cette position, les roues porteuses avant (33) sont éloignées du sol. Le rotor (2) est soulevé et ses outils de travail (16) sont éloignés du sol. Il ne repose alors plus sur le sol que par l'intermédiaire de deux roues arrière (34). Enfin, le vérin hydraulique (6) s'allonge et fait pivoter l'avant du bâti (1) par rapport au timon (4) de sorte que le rotor (2) soit sensiblement horizontal. Ainsi, les outils de travail (16) n'accrochent pas les obstacles qui peuvent se trouver sur le sol et les roues porteuses (34) ne ripent pas sur le sol dans les virages.

Pour revenir dans la position de travail, les vérins hydrauliques (6 et 38) sont commandés pour qu'ils se déplacent en sens inverses et l'entraînement en rotation du rotor (2) est rétabli.

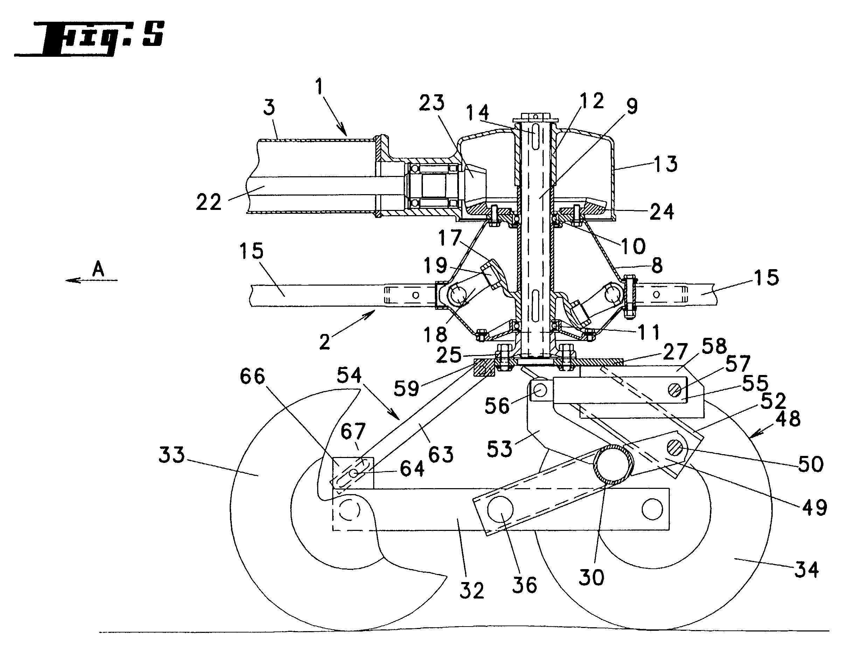

L'andaineur selon l'exemple des figures 4 à 6 travaille de la même manière que celui représenté sur les figures 1 à 3. Comme cela ressort plus particulièrement de la figure 5, le vérin hydraulique (55) est rétracté dans la position de travail. Lorsque les balanciers (31 et 32) sont en position horizontale, les axes d'articulations (64) de leurs chapes (65 et 66) se situent au milieu des orifices oblongs (67) des tiges de retenue (62 et 63). Lesdits balanciers (31 et 32) peuvent ainsi pivoter autour de leurs axes (35 et 36) sur la traverse (30), lorsque les roues porteuses (33 et 34) rencontrent des dénivellations.

Pour mettre la machine en position de transport, le vérin hydraulique (55) du dispositif (48) d'appui au sol est commandé pour qu'il s'allonge. Le levier (53) pousse la traverse (30) vers le bas, ce qui a pour effet de soulever tout le rotor (2) par pivotement autour de l'axe d'articulation (50). La barre transversale (59) tire alors les tiges de retenues (62 et 63) vers le haut. Celles-ci entraînent les balanciers (31 et 32) et les font pivoter autour de leurs axes de pivotement (35 et 36), dans une position oblique par rapport au sol. Les roues avant (33) sont alors éloignées du sol et seules les roues arrière (34) reposent sur celui-ci. Simultanément, le vérin hydraulique (6) est actionné pour qu'il s'allonge et fasse pivoter l'avant du bâti (1) par rapport au timon (4) de telle sorte que le rotor (2) soit sensiblement horizontal.

Dans ce cas, le pivotement relatif entre la traverse (30) et le rotor (2) ainsi que le pivotement des balanciers (31 et 32) provoquent un important soulèvement dudit rotor (2). Ses outils de travail (16) sont alors très éloignés du sol.

Pour remettre la machine en position de travail les sens de déplacement des vérins hydrauliques (55 et 6) sont inversés de sorte que le rotor (2) se rapproche du sol. Ensuite, l'entraînement en rotation du rotor (2) est rétabli.

Le mode de travail des rotors (2 et 2') de l'andaineur selon les figures 7 et 8 est pareil que celui qui est décrit en liaison avec le rotor (2) de l'andaineur représenté sur les figures 1 à 3. De plus, le deuxième rotor (2') peut être déplacé latéralement, autour de l'axe central (9) du premier rotor (2). Il peut ainsi être transposé dans une position telle que chaque rotor (2 et 2') forme son propre andain ou dans une position où le second rotor (2') reprend l'andain déposé par le premier rotor (2) et assure la formation d'un andain de plus grand volume.

Pour le transport (figure 8), l'entraînement en rotation est arrêté et le second rotor (2') est ramené dans le sillage du premier rotor (2) afin de réduire la largeur de l'ensemble. Ensuite, les deux rotors (2 et 2') sont soulevés par les vérins hydrauliques (55 et 55') et les tiges de retenue (62, 63 et 62', 63') de la manière qui a été décrite précédemment en liaison avec le rotor (2) de l'exemple selon les figures 4 à 6. Enfin, le vérin hydraulique (72) est actionné pour qu'il s'allonge. Il ramène ainsi la partie avant du bâti (1) et le rotor (2) en position horizontale.

La machine est alors portée par les seules roues arrière (34 et 34') des deux rotors (2 et 2'). Dans cette position, la distance entre les outils de travail (16 et 16') et le sol est très importante et les roues (34 et 34') ne ripent pas sur le sol dans les virages.

Pour revenir en position de travail, l'opérateur procède de la manière inverse.

La faneuse selon la figure 9 est également déplacée dans la direction (A) au moyen d'un tracteur durant le travail. Les rotors (78) sont entraînés en rotation depuis le tracteur, autour de leurs axes centraux (80) respectifs, de telle sorte qu'ils tournent deux à deux en convergence à l'avant. Lors de cette rotation, leurs outils de travail (86) ramassent les végétaux qui se trouvent au sol, les déplacent vers l'arrière entre les rotors (78) convergents et les étalent à nouveau derrière la machine tout en provoquant leur retournement. Les roues porteuses (90 et 91) roulent sur le sol. En position horizontale, l'axe d'articulation (97) du vérin hydraulique (93) avec la chape (95) du balancier (88) de chaque rotor (78) se situe au milieu de l'orifice oblong (96) de ladite chape (95). Les roues porteuses (90 et 91) et le balancier (88) peuvent ainsi se déplacer vers le haut et vers le bas autour de l'axe de pivotement (89) pour suivre les dénivellations du sol.

Pour le transport, l'entraînement en rotation des rotors (78) est coupé. Le vérin hydraulique (93) sous chaque rotor (78) de la machine est actionné de sorte qu'il se rétracte. Il tire alors sur le balancier (88) et le déplace autour de son axe de pivotement (89) dans une position oblique dans laquelle la roue avant (90) est éloignée du sol. La machine ne repose alors plus que sur les roues arrière (91) qui sont toutes situées sur une même ligne et ne ripent pas sur le sol dans les virages. Tous les rotors (78) sont soulevés de telle sorte que leurs outils de travail (86) soient éloignés du sol. Enfin, lesdits rotors (78) peuvent être amenés dans une position horizontale au moyen de la manivelle (83).

Pour revenir en position de travail, la manivelle (83) et les vérins hydrauliques (93) sont actionnés en sens inverses.

Il est bien évident que l'invention n'est pas limitée aux modes de réalisation décrits ci-dessus et représentés sur les dessins annexés. Des modifications restent possibles, notamment en ce qui concerne la constitution des divers éléments ou par substitution d'équivalents techniques, sans pour autant sortir du domaine de protection tel que défini dans les revendications.

## Revendications

1. Machine de fenaison comportant un bâti (1) relié à au moins un rotor (2, 2', 78) pour déplacer des végétaux sur le sol, lequel rotor (2, 2', 78) possède un moyeu (8, 8', 79) qui est muni de bras porte-outils (15, 15', 85) et qui est monté sur un axe central (9, 9', 80) sensiblement vertical ou incliné dans la direction d'avancement (A) de manière à pouvoir tourner sur celui-ci, ledit axe (9, 9', 80) étant lié au bâti (1) et comportant à son extrémité inférieure un dispositif d'appui au sol (26, 48, 48', 87) incluant au moins un balancier (31, 31', 32, 32', 88) qui est monté sur un axe de pivotement (35, 35', 36, 36', 89) sensiblement horizontal et qui est muni de deux roues porteuses (33, 33', 34, 34', 90, 91) roulant sur le sol durant le travail, ***caractérisée par le fait* que** le dispositif (26, 48, 48', 87) d'appui au sol comprend un moyen (37, 54, 54', 92) pour déplacer le ou chaque balancier (31, 31', 32, 32', 88) autour de son axe de pivotement (35, 36, 35', 36', 89) dans une position oblique dans laquelle une de ses deux roues porteuses (33, 33', 34, 34', 90, 91) et le rotor (2, 2', 78) avec ses outils de travail (16) sont éloignés du sol en vue du transport.

2. Machine selon la revendication 1, ***caractérisée par le fait* que** le moyen de déplacement (37, 54, 54', 92) de chaque balancier (31, 31', 32, 32', 88) comprend au moins un vérin hydraulique (38, 55, 55', 93).

3. Machine selon la revendication 2, ***caractérisée par le fait* que** le vérin hydraulique (93) est articulé sur un raccord (94) solidaire de l'axe central (80) et sur le balancier (88) correspondant.

4. Machine selon la revendication 3, ***caractérisée par le fait* que** le balancier (88) comporte une chape (95) avec un orifice oblong (96) dans lequel est logé un axe d'articulation (97) du vérin hydraulique (93).

5. Machine selon la revendication 2, ***caractérisée par le fait* que** le vérin hydraulique (38) est articulé sur des flasques (40, 41) reliés à l'axe central (9) et sur une pièce intermédiaire (43) qui est elle même articulée sur chaque balancier (31, 32).

6. Machine selon la revendication 5, ***caractérisée par le fait* que** chaque balancier (31, 32) comporte une chape (45, 46) avec un axe d'articulation (44) et que la pièce intermédiaire (43) comporte à chaque extrémité un orifice oblong (47) dans lequel se situe ledit axe (44).

7. Machine selon la revendication 1, ***caractérisée par le fait* que** le dispositif (48, 48') d'appui au sol comprend une traverse (30, 30') qui possède au moins un axe (35, 35', 36, 36') sur lequel est articulé un balancier (31, 31', 32, 32'), laquelle traverse (30, 30') est articulée par rapport à l'axe central (9, 9') du rotor (2, 2') correspondant à l'aide d'un axe (50, 50') sensiblement horizontal et que le moyen (54, 54') est constitué par un vérin hydraulique (55, 55') qui est articulé sur des flasques (58) reliés à l'axe central (9, 9') et sur un levier (53, 53') de la traverse (30, 30') et par une tige de retenue (62, 62', 63, 63') pour chaque balancier (31, 31', 32, 32').

8. Machine selon la revendication 7, ***caractérisée par le fait* que** chaque tige de retenue (62, 62', 63, 63') est articulée sur une barre transversale (59, 59') reliée à l'axe central (9, 9') et dans une chape (65, 65', 66, 66') du balancier (31, 31', 32, 32') correspondant.

9. Machine selon la revendication 8, ***caractérisée par le fait* que** la chape (65, 65', 66, 66') se situe près de l'extrémité avant du balancier (31, 31', 32, 32') correspondant.

10. Machine selon la revendication 8, ***caractérisée par le fait* que** chaque tige de retenue (62, 62', 63, 63') comporte un orifice oblong (67, 67') et que la chape (65, 65', 66, 66') correspondante comporte un axe (64, 64') qui passe dans ledit orifice oblong (67, 67').

## Claims

1. Haymaking machine comprising a frame (1) connected to at least one rotor (2, 2', 78) for moving plant matter on the ground, which rotor (2, 2', 78) has a hub (8, 8', 79) which is fitted with tool-carrier arms (15, 15', 85) and which is mounted on a central axis (9, 9', 80) that is substantially vertical or inclined in the direction of forward travel (A) so as to be able to rotate thereon, the said axis (9, 9', 80) being connected to the frame (1) and comprising at its lower end a device (26, 48, 48', 87') for resting on the ground, including at least one balance beam (31, 31', 32, 32', 88) which is mounted on a substantially horizontal pivot axis (35, 35', 36, 36', 89) and which is equipped with two carrier wheels (33, 33', 34, 34', 90, 91) which run over the ground during work, ***characterized in* that** the device (26, 48, 48', 87) for resting on the ground comprises a means (37, 54, 54', 92) for moving the or each balance beam (31, 31', 32, 32', 88) about its pivot axis (35, 36, 35', 36', 89) into an oblique position in which one of its two carrier wheels (33, 33', 34, 34', 90, 91) and the rotor (2, 2', 78) with its working tools (16) are away from the ground with a view to transport.

2. Machine according to Claim 1, ***characterized in* that** the means (37, 54, 54', 92) of moving each balance beam (31, 31', 32, 32', 88) comprises at least one hydraulic ram (38, 55, 55', 93).

3. Machine according to Claim 2, ***characterized in* that** the hydraulic ram (93) is articulated to a coupling (94) secured to the central axis (80) and to the corresponding balance beam (88).

4. Machine according to Claim 3, ***characterized in* that** the balance beam (88) comprises a jaw (95) with an oblong orifice (96) in which an axis of articulation (97) of the hydraulic ram (93) is housed.

5. Machine according to Claim 2, ***characterized in* that** the hydraulic ram (38) is articulated to plates (40, 41) connected to the central axis (9) and to an intermediate piece (43) which is itself articulated to each balance beam (31, 32).

6. Machine according to Claim 5, ***characterized in* that** each balance beam (31, 32) comprises a jaw (45, 46) with an axis of articulation (44) and **in that** the intermediate piece (43) comprises, at each end, an oblong orifice (47) in which the said axis (44) is situated.

7. Machine according to Claim 1, ***characterized in* that** the device (48, 48') for resting on the ground comprises a crossbeam (30, 30') which has at least one axis (35, 35', 36, 36') to which a balance beam (31, 31', 32, 32') is articulated, which crossbeam (30, 30') is articulated with respect to the central axis (9, 9') of the corresponding rotor (2, 2') with the aid of a substantially horizontal axis (50, 50') and **in that** the means (54, 54') consists of a hydraulic ram (55, 55') which is articulated to plates (58) connected to the central axis (9, 9') and to a lever (53, 53') of the crossbeam (30, 30') and by a retaining rod (62, 62', 63, 63') for each balance beam (31,31', 32, 32').

8. Machine according to Claim 7, ***characterized in* that** each retaining rod (62, 62', 63, 63') is articulated to a transverse bar (59, 59') connected to the central axis (9, 9') and in a jaw (65, 65', 66, 66') of the corresponding balance beam (31, 31', 32,32').

9. Machine according to Claim 8, ***characterized in* that** the jaw (65, 65', 66, 66') is situated near the front end of the corresponding balance beam (31, 31', 32, 32').

10. Machine according to Claim 8, ***characterized in* that** each retaining rod (62, 62', 63, 63') has an oblong orifice (67, 67') and **in that** the corresponding jaw (65, 65', 66, 66') has an axis (64, 64') which passes through the said oblong orifice (67, 67').

## Patentansprüche

1. Heuwerbungsmaschine mit einem Rahmen (1), der mit mindestens einem Rotor (2, 2', 78) verbunden ist, um Pflanzengut über den Boden zu bewegen, wobei der Rotor (2, 2', 78) eine Nabe (8, 8', 79) besitzt, die mit Werkzeugtragarmen (15, 15', 85) versehen und an einer im Wesentlichen vertikalen oder in Fahrtrichtung (A) geneigten zentralen Achse (9, 9', 80) angebracht ist, so dass sie sich um diese drehen kann, wobei die Achse (9, 9', 80) mit dem Rahmen (1) verbunden ist und an ihrem unteren Ende eine Vorrichtung (26, 48, 48', 87) zur Abstützung auf dem Boden mit mindestens einer Schwinge (31, 31', 32, 32', 88) aufweist, die an einer im Wesentlichen horizontalen Schwenkachse (35, 35', 36, 36', 89) angebracht und mit zwei während des Betriebs über den Boden rollenden Tragrädern (33, 33', 34, 34', 90, 91) versehen ist, ***dadurch gekennzeichnet*, dass** die Vorrichtung (26, 48, 48', 87) zur Abstützung auf dem Boden ein Mittel (37, 54, 54', 92) zur Bewegung der oder jeder Schwinge (31, 31', 32, 32', 88) um ihre Schwenkachse (35, 36, 35', 36', 89) in eine schräge Stellung umfasst, in der eines ihrer beiden Tragräder (33, 33', 34, 34', 90, 91) und der Rotor (2, 2', 78) mit seinen Arbeitswerkzeugen (16) zum Transport vom Boden entfernt sind.

2. Maschine nach Anspruch 1, ***dadurch gekennzeichnet*, dass** das Mittel (37, 54, 54', 92) zur Bewegung jeder Schwinge (31, 31', 32, 32', 88) mindestens einen Hydraulikzylinder (38, 55, 55', 93) umfasst.

3. Maschine nach Anspruch 2, ***dadurch gekennzeichnet*, dass** der Hydraulikzylinder (93) an einem fest mit der zentralen Achse (80) verbundenen Verbinder (94) und an der entsprechenden Schwinge (88) angelenkt ist.

4. Maschine nach Anspruch 3, ***dadurch gekennzeichnet*, dass** die Schwinge (88) einen Bügel (95) mit einem Langloch (96) enthält, in dem eine Gelenkachse (97) des Hydraulikzylinders (93) untergebracht ist.

5. Maschine nach Anspruch 2, ***dadurch gekennzeichnet*, dass** der Hydraulikzylinder (38) an mit der zentralen Achse (9) verbundenen Flanschen (40, 41) und an einem Zwischenstück (43) angelenkt ist, das seinerseits an jeder Schwinge (31, 32) angelenkt ist.

6. Maschine nach Anspruch 5, ***dadurch gekennzeichnet*, dass** jede Schwinge (31, 32) einen Bügel (45, 46) mit einer Gelenkachse (44) umfasst und dass das Zwischenstück (43) an jedem Ende ein Langloch (47) enthält, in dem sich die Achse (44) befindet.

7. Maschine nach Anspruch 1, ***dadurch gekennzeichnet*, dass** die Vorrichtung (48, 48') zur Abstützung auf dem Boden einen Querträger (30, 30') umfasst, der mindestens eine Achse (35, 35', 36, 36') aufweist, an die eine Schwinge (31, 31', 32, 32') angelenkt ist, wobei der Querträger (30, 30') mittels einer im Wesentlichen horizontalen Achse (50, 50') bezüglich der zentralen Achse (9, 9') des entsprechenden Rotors (2, 2') angelenkt ist und, dass das Mittel (54, 54') durch einen Hydraulikzylinder (55, 55'), der an mit der zentralen Achse (9, 9') verbundenen Flanschen (58) und an einem Hebel (53, 53') des Querträgers (30, 30') angelenkt ist, und durch eine Haltestange (62, 62', 63, 63') für jede Schwinge (31,31', 32,32') gebildet wird.

8. Maschine nach Anspruch 7, ***dadurch gekennzeichnet*, dass** jede Haltestange (62, 62', 63, 63') an einer mit der zentralen Achse (9, 9') verbundenen Querstange (59, 59') und in einem Bügel (65, 65', 66, 66') der entsprechenden Schwinge (31, 31', 32, 32') angelenkt ist.

9. Maschine nach Anspruch 8, ***dadurch gekennzeichnet*, dass** sich der Bügel (65, 65', 66, 66') in der Nähe des vorderen Endes der entsprechenden Schwinge (31,31', 32,32') befindet.

10. Maschine nach Anspruch 8, ***dadurch gekennzeichnet*, dass** jede Haltestange (62, 62', 63, 63') ein Langloch (67, 67') aufweist und der entsprechende Bügel (65, 65', 66, 66') eine sich im Langloch (67, 67') erstreckende Achse (64, 64') besitzt.
